# EUROPEAN PATENT APPLICATION

(11) **EP 3 417 923 A1**
(43) Date of publication of application: **26.12.2018**
(21) Application number: 17176977.1
(22) Date of filing: 20.06.2017
(51) Int. Cl.: B01D 3/00, B01D 3/32

(54) **A LIQUID DISTRIBUTOR FOR A SEPARATION DEVICE COMPRISING A SCREEN MADE OF A CARBON COMPOSITE MATERIAL**

(71) Applicant: Sulzer Chemtech AG, 8401 Winterthur (CH); SGL Carbon SE, 65201 Wiesbaden (DE)
(72) Inventor: BAUMANN, Christian, 8548 Ellikon an der Thur (CH); AUSNER, Ilja, 7837 Öhningen (DE); KUCHER, Martin, 86405 Meitingen (DE); SPULLER, Ralph, 86405 Meitingen (DE)
(74) Representative: Henkel, Breuer & Partner

(57) **Abstract**

A liquid distributor for a separation device, such as for a mass transfer column in particular for a packing column for absorption, stripping, scrubbing or distillation, wherein the liquid distributor comprises at least one distributor member having two or more outlet openings for an outflow of liquid in the form of jets, and wherein the liquid distributor further comprises at least one screen which is arranged in front of the outlet openings so that liquid jets outflowing through the outlet openings of the distributor member impinge onto the surface of the at least one screen and are deformed thereon to thin flowing liquid films, wherein at least one of the at least one screen is made at least partially of a carbon composite material.

## Description

The present invention relates to a liquid distributor for a separation device, such as for a mass transfer column and in particular for a packing column for absorption, stripping, scrubbing or distillation, to a respective column for mass transfer including such a liquid distributor as well as to the use of such a separation device and column.

Mass transfer columns are employed for an intensive gas-liquid or liquid-liquid contact in a wide variety of processes, such as in particular absorption, stripping, scrubbing, distillation, extraction and the like. Distillation columns, for example, are designed to separate a specific substance from a liquid mixture comprising two or more substances by selective evaporation and condensation. For this purpose, distillation columns comprise a boiler at the bottom and a condenser at the top so that during the operation vapour rises upwardly and liquid descends so as to enable a gas-liquid contact for effecting the mass transfer between both phases. The substance with the higher boiling point will concentrate in the liquid phase, wherein the substance with the lower boiling point will concentrate in the gas phase. In order to achieve an intensive gas-liquid contact, such columns are typically filled with an internal to optimize the gas-liquid mass transfer. Examples for such an internal are trays and packings, for instance random packings and structured packings, such as in particular a packing with cross channel structure. An essential requirement for an optimal mass transfer between both phases is that liquid is uniformly distributed over the cross-section of the tray or packing, respectively. Moreover, it is further important in particular for packing columns, i.e. columns including a random or structured packing, that the liquid flows on the surface of the packing as a thin film so as to maximize the contact area and contact time between the liquid phase and the gas phase. For both aforementioned purposes, usually liquid distributors are provided at the top of the packing or each of the packing layers, respectively.

Such liquid distributors are available in several principal construction designs. One of these principal designs is a liquid distributor comprising one or more distributor members, such as for instance in form of troughs, for collecting liquid therein, wherein each of the troughs includes two or more, namely usually a plurality, of outlet openings in the trough wall, wherein the outlet openings are located in the trough wall so that they are beneath the liquid level, which is adjusted inside the trough during the operation of the liquid distributor. Thus, during the operation the liquid collected in the trough flows out through the outlet openings in the form of jets. In order to form a thin liquid film, one or more screens in the form of specifically formed guide walls are arranged in front of (or ahead, respectively) the outlet openings, onto which the liquid jets impinge in a specific impact angle so as to avoid at least substantially the formation of splashes of small liquid drops at the site of impact on the screen. In tendency, the impact angle of the liquid onto the screen should be small in order to avoid such a splashing. The liquid film, which is formed on the screen surface, flows down the screen surface to the lower end of the screen, which forms a drip edge, from which the liquid falls down in form of liquid drops onto the surface of the packing or packing layer, respectively, which is located closely underneath the drip edge of the screen.

Since these screens are during the operation in permanent contact with the liquid, they need to be made of a material with a high chemical resistance and in particular with a high corrosion resistance, if used in a corrosive medium, as well as with a high mechanical stability, such as sufficiently high stiffness. On account of these reasons, such screens are usually made of a metal, such as in particular of titanium, of tantalum or of zirconia. However, due to their high densities and price, screens made of such materials are comparable heavy and expensive. Moreover, the wettability of these materials is not excellent, so that it is difficult, if not impossible to form on screens made of such materials a broad and smooth liquid film. The formation of a uniform and thin liquid film is in particular difficult in the case of a low liquid loading in the column of for example less than 5 m³/m²·h. However, the formation of a broad and smooth liquid film would be advantageous, because the better the screen is covered by the liquid the better will be the distribution of the liquid onto the packing arranged below the liquid distributor. Even if it is known that the wettability of such screens may be improved by covering the metal screens with meshes, this leads to an increment of costs, since such meshes are generally, if available at all, very expensive. In addition, screens made of a metal cannot be easily and inexpensively shaped into complex shapes for example by bending or folding metals or by assembling and joining metallic pieces together. However, complex shapes are necessary in order to optimize the screen construction for an optimized form/geometry and thus to optimize its desired function.

In view of this, the object underlying the present invention is to provide a liquid distributor for a mass transfer column, in particular for a packing column of the type comprising one or more distributor members including each a plurality of outlet openings and further comprising at least one screen which is arranged in front of the outlet openings, wherein the liquid distributor and particularly the screen has an excellent chemical resistance, in particular an excellent corrosion resistance, an excellent mechanical stability, such in particular an excellent stiffness, as well as an improved wettability, and wherein the screen is comparable light and cost-efficient. Moreover, the screen shall be made of a material, which allows to easily and inexpensively shape the screen into a complex shape.

This object is satisfied in accordance with the present patent application by providing a liquid distributor for a separation device, such as for a mass transfer column, in particular for a packing column for absorption, stripping, scrubbing or distillation, wherein the liquid distributor comprises at least one distributor member having two or more outlet openings for an outflow of liquid in the form of jets, and wherein the liquid distributor further comprises at least one screen which is arranged in front of the outlet openings so that liquid jets outflowing through the outlet openings of the distributor member impinge onto the surface of the at least one screen and are deformed thereon to thin flowing liquid films, wherein at least one of the at least one screen is made at least partially of a carbon composite material.

A carbon composite material denotes in the sense of the present invention a material made of two or more constituent materials, wherein one of the constituent materials is a matrix of plastic or carbon, respectively, in which the residual constituent material(s) is/are dispersed. Prominent examples therefore are fiber reinforced plastic and fiber reinforced carbon, which comprise fibers, which are embedded in a carbon or plastic matrix, respectively, such as carbon fiber reinforced plastic and carbon fiber reinforced carbon, which comprise carbon fibers, which are embedded in a carbon or plastic matrix, respectively.

Furthermore, a screen denotes in the sense of the present invention any element, which is suitable for fulfilling for example in a liquid distributor of a mass transfer column the function of deforming liquid jets impinging onto its surface to thin downwardly flowing liquid films and of distributing the liquid of the liquid films to a mass transfer element, such as a packing, which is located underneath the liquid distributor. Such screens are sometimes referred in the technical field to as skirts, drain elements, meshes or webbing.

This solution bases on the surprising finding that by producing the screen of a liquid distributor of a carbon composite material, such as in particular of a carbon fiber reinforced carbon, the wettability of the screen surface is significantly increased. Without wishing bound to any theory, it is believed that this is due to the chemical nature of the carbon surface in combination with the porosity of the carbon surface of carbon composite materials. This excellent wettability of the screen surface effects that liquid impinging onto the screen surface forms a broad and smooth liquid film on the screen surface allowing a uniform liquid distribution of the liquid onto the packing arranged in the mass transfer column below the liquid distributor. Moreover, a screen made of such a material has an excellent chemical resistance as well as an excellent mechanical stability and in particular an excellent corrosion resistance as well as an excellent stiffness. In addition, carbon composite materials have a drastically lower density and are cheaper than metals, such as titanium, tantalum or zirconia, so that the liquid distributor in accordance with the present invention is also comparably light and cost-efficient. Another advantage thereof is that it is - in comparison to bending or folding metals or assembling and joining metallic pieces together- easier and more inexpensively possible to shape a carbon composite material into complex shapes compared to a metal. In turn, complex shapes allow to optimize the screen construction for an optimized form/geometry and thus to optimize its desired function. On account of all these properties, the liquid distributor in accordance with the present invention is perfectly well suited for being used in a mass transfer column and in particular a packing column of the type comprising one or more distributor members including each a plurality of outlet openings and further comprising at least one screen which is arranged in front of the outlet openings.

The carbon composite material, from which the at least one screen of the liquid distributor in accordance with the present invention is at least partially made, may be a fiber reinforced plastic. Fiber reinforced plastic means in the sense of the present patent application any composite material, in which fibers are embedded in a matrix of plastic, such as in the present case preferably a phenolic resin based plastic.

Particular good results with respect to the mechanical properties and notably with respect to the stiffness are obtained, when the carbon composite material, from which at least one screen of the liquid distributor in accordance with the present invention is at least partially made, is a fiber reinforced carbon. Particularly concerning the wettability, fiber reinforced carbon shows significantly better results than fiber reinforced plastic. Fiber reinforced carbon means in the sense of the present patent application any composite material, in which fibers are embedded in a matrix of carbon or graphite, respectively.

In general, the present invention is not limited with regard to the chemical nature of the fiber of the fiber reinforced carbon or fiber reinforced plastic. Examples are for instance glass fibers, carbon fibers, organic fibers, ceramic fibers, metal-coated fibers, metal fibers and combinations thereof. The fibers may be included in the fiber reinforced carbon or fiber reinforced plastic in the form of a textile, such as a woven fabric and particularly preferably in the form of a unidirectional fabric made out of several carbon fiber rovings.

However, particular good results are obtained with regard to the wettability as well as with regard to the mechanical properties, when the carbon composite material, from which the at least one screen of the liquid distributor in accordance with the present invention is at least partially made, is a carbon fiber reinforced carbon.

In accordance with a particular preferred embodiment of the present invention, the at least one screen of the liquid distributor consists, i.e. is completely made, of the carbon composite material and more preferably from a carbon fiber reinforced carbon. Thereby, the advantageous effects of the present invention, namely in particular the improvement of the wettability of the screen surface, of the mechanical properties as well as of the chemical and corrosion resistance of the screen, are obtained to a high extent.

On account of the same reasons, it is preferred that - if the liquid distributor comprises more than one screen - each screen of the liquid distributor is made at least partially and more preferably completely of a carbon composite material. Most preferably, each screen of the liquid distributor consists of carbon fiber reinforced carbon.

Any of the at least one screen may be a closed or at least partially porous solid. Optionally, any of the at least one screen may have one or more surface structures, like channels or the like.

In order to adjust the wettability of the screen surface into a desired range, it is further proposed in a further development of the idea of the present invention that the carbon composite material of the screen(s) of the liquid distributor has a porosity of 5 to 30%.

In principle, the liquid distributor in accordance with the present invention may have any design, as long as it comprises at least one distributor member having two or more outlet openings for an outflow of liquid in the form of jets, wherein the liquid distributor further comprises at least one screen made of the aforementioned composite material which is arranged in front of the outlet openings so that liquid jets outflowing through the outlet openings of the distributor member impinge onto the surface of the at least one screen and are deformed thereon to thin flowing liquid films. In particular, the liquid distributor in accordance with the present invention may be designed for a packing column, i.e. for a column, which includes one or more packings, such as structured packings or random packings, wherein the at least one distributor member is at least substantially tubular or at least substantially trough-like, and wherein the at least one screen is arranged so that it shields the outlet openings against a gas stream flowing upwardly in the column.

In tendency, the present invention is not limited with regard to the orientation of the outlet openings to the screen as long as it assures that during the operation of the liquid distributor liquid jets outflowing through the outlet openings of the distributor member impinge onto the surface of the at least one screen and are deformed thereon to thin flowing liquid films. Particularly suitable is a design, in which the at least one screen is arranged in front of the outlet openings so that in the event of a maximum outflow, the liquid jets outflowing through the outlet openings of the distributor member impinge onto the surface of the at least one screen at angles of less than 60°, preferably of less than 30° and more preferably of less than 10°, wherein the angle is that between the direction of liquid jet outflowing through the outlet openings and the tangent at the point of the surface of the screen, where the liquid jet impinges. This assures that a uniform thin liquid film is formed on the screen surface without any or at least essentially without the formation of splashes of small liquid drops at the site of impact on the screen.

In order to allow the liquid film formed on the screen(s) of the liquid distributor to pass downwards so as to be uniformly distributed over the cross-section of the part underneath the liquid distributor, which will be after its assembly into a packed column a packing, it is further proposed in accordance with a further preferred embodiment of the present invention that the lower end of the screen(s) of the liquid distributor is formed as drip edge. For this purpose, it is preferred that at least one of the at least one screen and even more preferred that each of the at least one screen has - seen in the vertical direction as well as in the jet-parallel section - the shape of a sigmoidal curve. Still more preferably, the sigmoidal curve is curved downwardly so that the drip edge is formed at the lowest point of the screen. Optionally, the lower drip edge may be jagged or may have a waveform so that liquids with strong cohesion forces, like water, can collect at the wave or jagged edge tips of the drip edge and then drip off.

However, it has to be noted that the present invention does not require that the at least one screen is formed at its lower end as a drip edge. This is due to the fact that the screen(s) used in the present invention effect(s) - on account of the fact that it is made of a carbon composite material, which has an excellent wettability - that jets of liquid impinging thereon spread out and remain in a parabola form so that the liquid flows down the screen surface as broad film, so that the broad liquid film is uniformly distributed over the cross-section of the tray or packing, respectively, located underneath the liquid distributor. In contrast thereto, jets of liquid impinging on conventional screens made of metal tend to spread out and then recoalesce or rejoin to give a narrow liquid stream.

Moreover, it is preferred that the screen has a largely constant curvature in the region in which the liquid jets impinge onto the surface of the at least one screen, in order to assure that a particular uniform thin liquid film is formed on the screen surface.

Also, in order to assure that a particular uniform thin liquid film is formed on the screen surface it is preferred that the at least one screen is arranged in front of the outlet openings so that liquid jets outflowing through the outlet openings of the distributor member impinge onto the surface of the at least one screen essentially tangentially.

In principle, the distributor member of the liquid distributor may be made of any material, such as of a metal, such as of titanium, tantalum or zirconia, or of a plastic. However, in view of cost efficiency, of weight reduction, of excellent chemical and corrosion resistance as well as of mechanical stability, it is proposed in accordance with a further preferred embodiment of the present invention that also the distributor member of the liquid distributor is made of a carbon composite material, preferably of a fiber reinforced carbon and most preferably of a carbon fiber reinforced carbon.

A further aspect of the present invention is a column for mass transfer, in particular for absorption, stripping, scrubbing or distillation, wherein the column includes at least one packing and at least one above described liquid distributor.

It is preferred for such a packing column that the at least one distributor member is tubular or trough-like, and wherein the at least one screen is arranged so that it shields the outlet openings against a gas stream flowing upwardly through the column. This is preferably achieved with a sigmoidal curved screen, wherein the sigmoidal curve is curved downwardly and preferably the sigmoidal curve has a largely constant curvature in the region in which the liquid jets impinge onto the surface of the at least one screen.

Preferably, the column comprises two or more parallel distributor members with each of the one or more screens comprising drip edges, wherein the distributor members are arranged so that the distributor members subdivide a gas stream flowing upwardly in the column into a plurality of partial streams so that stagnation zones form beneath the distributor members, wherein the drip edges of the screens are arranged inside the stagnation zones.

In accordance with a further aspect, the present invention relates to a screen for a liquid distributor for a separation device, such as for a mass transfer column in particular for a packing column for absorption, stripping, scrubbing or distillation, wherein the screen is designed so that - when it is installed in a liquid distributor further comprising at least one distributor member having two or more outlet openings for an outflow of liquid in the form of jets, with the screen being arranged in front of the outlet openings - liquid jets outflowing through the outlet openings of the distributor member impinge onto the surface of the screen and are deformed thereon to thin flowing liquid films, wherein the screen is made at least partially of a carbon composite material.

According to a further aspect, the present invention relates to the use of an above described liquid distributor or of an above described column for performing a separation process, such as absorption, stripping, scrubbing or distillation.

Due to the excellent corrosion resistance of carbon composite material, such as fiber reinforced plastic and in particular carbon fiber reinforced carbon, the use in accordance with the present invention is in particular suitable for applications, in which corrosive components are involved.

Moreover, on account of the excellent wettability of screen surfaces made of carbon composite material, such as fiber reinforced carbon and in particular carbon fiber reinforced carbon, the use in accordance with the present invention is in particular suitable for performing a separation process with comparable low liquid loadings, such as for performing a separation process with a liquid irrigation density of less than 20 m³/m²·h, preferably of less than 10 m³/m²·h, more preferably of less than 14 m³/m²·h and most preferably of less than 5 m³/m²·h. The irrigation density is expressed in volumetric flow rate of liquid in relation to the cross-section of the column.

Subsequently, the present patent application is described by way of example with reference to advantageous embodiments and to the enclosed drawings.

There is shown:
- FIG. 1: A schematic longitudinal sectional view of a mass transfer column including a packing and a liquid distributor in accordance with one embodiment of the present invention.
- FIG. 2: A schematic sectional view of a liquid distributor with a screen of a mass transfer column shown in Fig. 1.
- FIG. 3a, b: Details of the liquid distributor of the mass transfer column shown in Fig. 1.
- FIG. 4: A schematic sectional view of a liquid distributor with a screen of a mass transfer column in accordance with another embodiment of the present invention.
- FIG. 5a: A schematic view onto the surface of a screen made of a carbon fiber reinforced carbon in accordance with an embodiment of the present invention onto which a jet of water is impinged.
- FIG. 5b: A schematic view onto the surface of a screen made of metal in accordance with the prior art onto which a jet of water is impinged.

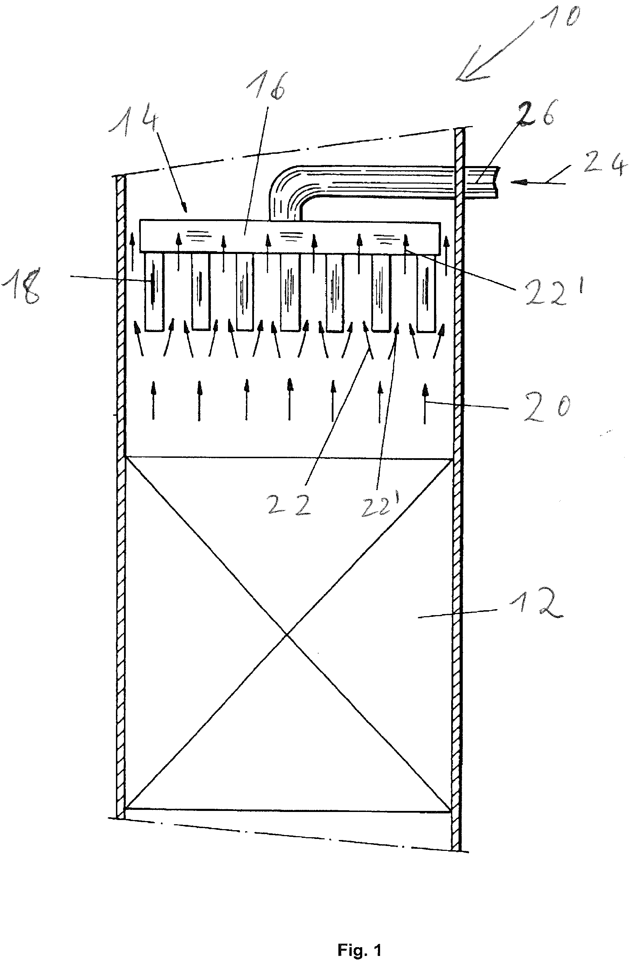

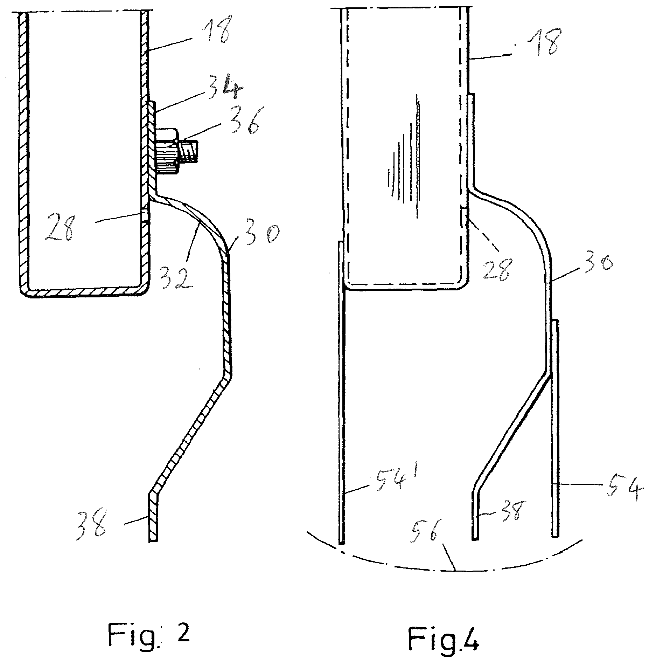

The mass transfer column 10 shown in Fig. 1 comprises a packing 12 and a liquid distributor 14. The liquid distributor 14 comprises a pre-distributor 16 and several distributor members 18, each of which having a plurality of outlet openings shown in Fig. 2, 3a and 4 for an outflow of liquid in the form of jets. During the operation of the mass transfer column 10, gas 20 ascends the mass transfer column 10, passes around the distributor members 18 and is divided by the distributor members 18 into a plurality of partial gas streams 22', 22. Liquid 24 is fed into the liquid distributor 14 via a feed line 26 and is guided through the pre-distributor 16 into the distributor members 18.

As shown in Fig. 2, each of the distributor members 18 has the form of a trough and provides at its lower end the outlet openings 28. In front of the outlet openings 28, a screen 30 is arranged so that liquid jets outflowing through the outlet openings 28 impinge onto the surface of the screen 30 and are deformed thereon to thin flowing liquid films. In accordance with the present invention, each of the screens 30 is made of a carbon composite material and in particular from a carbon fiber reinforced carbon. As shown in Fig. 2, the screen has in cross-section the form of a sigmoidal curve, wherein the sigmoidal curve is curved downwardly and the sigmoidal curve has a largely constant curvature in the impinge region 32, in which the liquid jets impinge onto the surface of the screen 30. The screen 30 is affixed to the distributor member 18 at its upper end 34 with a screw 36 and is designed at its lower end as a drip edge 38. During the operation of the mass transfer column 10, liquid flows out of the outlet openings 28 in the form of liquid jets, which impinge at the impinge region 32 onto the surface of the screen 30 essentially tangentially so as to form a thin flowing liquid film, which flows down the screen down to the drip edge 38. Droplets or trickles, which form at the drip edge 38, fall down onto the surface of the packing 12, which is located closely underneath the drip edge 38 of the screen 30. On account of the curvature, the liquid film is not or at least only to a small degree disturbed by ascending gas 20, since the gas 20 is guided by the screen 30 away from the thin liquid film flowing down the surface of the screen. On account thereof, the liquid droplets formed at the drip edge 38 fall down to the underneath packing 12 without or at least essentially without any of the droplets being carried away by the ascending gas 20.

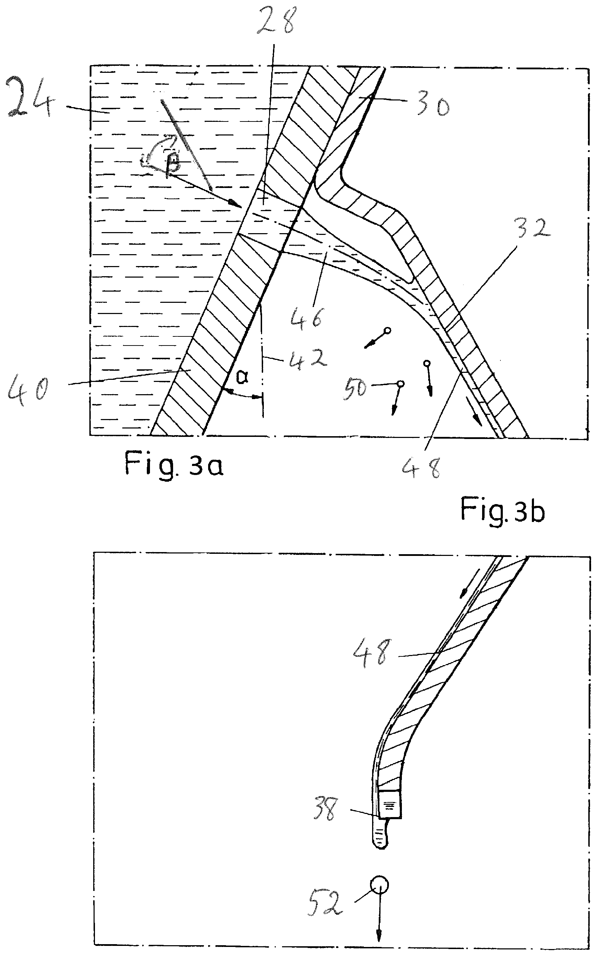

Fig. 3a shows the area around the outlet opening 28 of the distributor member 18 in more detail. More specifically, the outlet opening 28 is provided in a wall 40, which is inclined with regard to the vertical 46 with the angle α. The liquid 24 flows during the operation of the mass transfer column 10 through the outlet opening 28 and forms a liquid jet 46, which impinges onto the impinge region 32 on the surface of the screen 30 with an impingement angle β so as to form a thin flowing liquid film 48. Upon the impingement, to a minor degree fine liquid droplets 50 are formed as splashes. The smaller the impact angle, the smaller the amount of formed liquid droplets 50. As shown in Fig. 3b, the formed liquid film 48 flows down the surface of the screen 30 down to the drip edge 38, where liquid droplets 52 are formed, which fall down onto the surface of the packing 12, which is located closely underneath the drip edge 38 of the screen 30.

The liquid distributor 18 with the screen 30 shown in Fig. 4 is similar to that shown in Fig. 2 except that the liquid distributor 18 with the screen 30 of the embodiment shown in Fig. 4 further contains two skirts 54, 54'. While the first skirt 54 is affixed to the screen 30, the second skirt 54' is affixed to the liquid distributor 18. Both skirts 54, 54' allow to influence the stream of gas 20 advantageously, namely so that a stagnation zone 56 is formed beneath the distributor member 18, wherein the drip edge 38 of the screen 30 is arranged inside the stagnation zone.

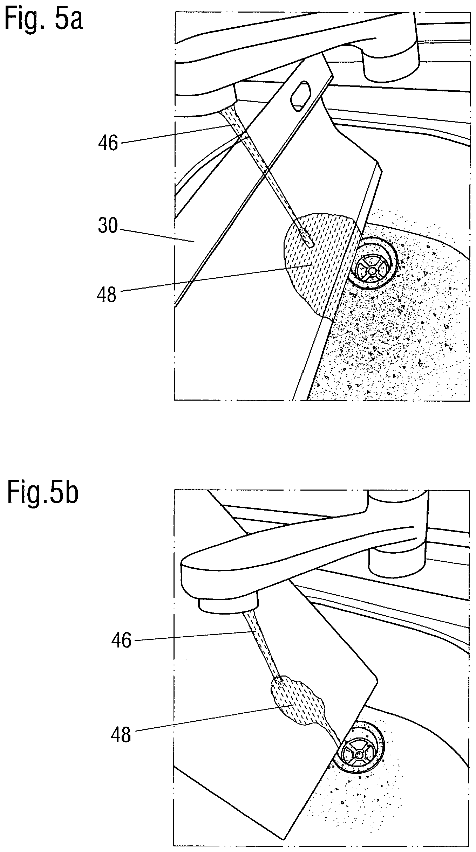

As set out further above, the screen made of a carbon composite material as used in the liquid distributor in accordance with the present invention has an excellent wettability effecting that a liquid jet impinging onto the screen surface forms a broad and smooth liquid film on the screen surface. This is shown in FIG. 5a, in which a water jet 46 is impinged onto the surface of a plate made of a carbon fiber reinforced carbon imitating a screen 30 in accordance with an embodiment of the present invention. As shown, the water jet 46 impinging onto the screen spreads out and remains in a parabola form so that the liquid flows down the screen surface as broad water film 48.

In contrast thereto, jets of liquid impinging on conventional screens made of metal tend to spread out and then recoalesce or rejoin to give a narrow liquid stream. This is schematically shown in Fig. 5b, in which a water jet 46 is impinged onto the surface of a plate made of metal imitating a screen in accordance with the prior art. As shown, the water jet 46 impinging onto the screen spreads out and then recoalesces or rejoins, respectively, to give a narrow liquid stream 48.

### Reference Numeral List

- 10: Mass transfer column
- 12: Packing
- 14: Liquid distributor
- 16: Pre-distributor
- 18: Distributor member
- 20: Gas
- 22, 22': Gas partial streams
- 24: Liquid
- 26: Feed line
- 28: Outlet openings
- 30: Screen
- 32: Impinge region
- 34: Upper end of screen
- 36: screw
- 38: Drip edge
- 40: Wall of the distributor member
- 42: Vertical
- 46: Liquid jet
- 48: Liquid film
- 50: Droplet / Splash
- 52: Liquid droplet formed at edge drip
- 54, 54': Skirts
- 56: Stagnation zone

- α: Angle between the wall and the vertical
- β: Impingement angle

## Claims

1. A liquid distributor (14) for a separation device, such as for a mass transfer column (10) in particular for a packing column for absorption, stripping, scrubbing or distillation, wherein the liquid distributor (14) comprises at least one distributor member (18) having two or more outlet openings (28) for an outflow of liquid (24) in the form of jets (46), and wherein the liquid distributor (14) further comprises at least one screen (30) which is arranged in front of the outlet openings (28) so that liquid jets (46) outflowing through the outlet openings (28) of the distributor member (18) impinge onto the surface of the at least one screen (30) and are deformed thereon to thin flowing liquid films (48), wherein at least one of the at least one screen (30) is made at least partially of a carbon composite material.

2. The liquid distributor (14) in accordance with claim 1, wherein the carbon composite material is a fiber reinforced carbon.

3. The liquid distributor (14) in accordance with claim 1 or 2, wherein the carbon composite material is a carbon fiber reinforced carbon.

4. The liquid distributor (14) in accordance with any of the preceding claims, wherein at least one of the at least one screen (30) consists of the carbon composite material.

5. The liquid distributor (14) in accordance with any of the preceding claims, wherein all of the at least one screen (30) are made at least partially of a carbon composite material and preferably consist of a carbon composite material.

6. The liquid distributor (14) in accordance with any of the preceding claims, wherein the carbon composite material has a porosity of 5 to 30%.

7. The liquid distributor (14) in accordance with any of the preceding claims, which is designed for a packing column (10), wherein the at least one distributor member (18) is tubular or trough-like, and wherein the at least one screen (30) is arranged so that it shields the outlet openings against a gas stream (20) flowing upwardly.

8. The liquid distributor (14) in accordance with any of the preceding claims, wherein the at least one screen (30) is arranged in front of the outlet openings (28) so that in the event of a maximum outflow of liquid, the liquid jets (46) outflowing through the outlet openings (28) of the distributor member (18) impinge onto the surface of the at least one screen (30) at angles of less than 60°, preferably of less than 30° and more preferably of less than 10°, wherein the angle is that between the direction of liquid jet (46) outflowing through the outlet openings (28) and the tangent at the point of the surface of the screen (30), where the liquid jet (46) impinges.

9. The liquid distributor (14) in accordance with any of the preceding claims, wherein at least one of the at least one screen (30) and preferably each of the at least one screen (30) has the shape of a sigmoidal curve in the vertical direction as well as in the jet-parallel section, wherein the sigmoidal curve is more preferably curved downwardly and/or has a largely constant curvature in the region (32) in which the liquid jets (46) impinge onto the surface of the at least one screen (30).

10. The liquid distributor (14) in accordance with any of the preceding claims, wherein the at least one screen (30) is arranged in front of the outlet openings (28) so that liquid jets (46) outflowing through the outlet openings (28) of the distributor member (18) impinge onto the surface of the at least one screen (30) essentially tangentially.

11. The liquid distributor (14) in accordance with any of the preceding claims, wherein the distributor member (18) is made of a metal or a plastic, wherein the metal is preferably titanium, tantalum or zirconia, and/or, wherein the distributor member (18) is made of a carbon composite material, preferably of a fiber reinforced carbon and most preferably of a carbon fiber reinforced carbon.

12. A column (10) for mass transfer, in particular for absorption, stripping, scrubbing or distillation, wherein the column (10) includes at least one packing and at least one liquid distributor (14) in accordance with any one of the preceding claims, wherein the at least one distributor member (18) is preferably tubular or trough-like, and wherein the at least one screen (30) is arranged so that it shields the outlet openings (28) against a gas stream (20) flowing upwardly through the column (10).

13. The column (10) in accordance with claim 12, which comprises two or more parallel distributor members (18) with each of the one or more screens (30) comprising drip edges (38), wherein the distributor members (18) are arranged so that the distributor members (18) subdivide a gas stream (20) flowing upwardly in the column into a plurality of partial streams (22, 22') so that stagnation zones (56) form beneath the distributor members (18), wherein the drip edges (38) of the screens (30) are arranged inside the stagnation zones (56).

14. A screen (30) for a liquid distributor (14) for a separation device, such as for a mass transfer column (10) in particular for a packing column for absorption, stripping, scrubbing or distillation, wherein the screen (30) is designed so that - when it is installed in a liquid distributor (14) further comprising at least one distributor member (18) having two or more outlet openings (28) for an outflow of liquid (24) in the form of jets (46), with the screen being arranged in front of the outlet openings (28) - liquid jets (46) outflowing through the outlet openings (28) of the distributor member (18) impinge onto the surface of the screen (30) and are deformed thereon to thin flowing liquid films (48), wherein the screen (30) is made at least partially of a carbon composite material.

15. Use of a liquid distributor in accordance with any one of claims 1 to 11 or of a column (10) in accordance with claim 12 o 13 for performing a separation process involving corrosive components and/or for performing a separation process with liquid irrigation densities of less than 20 m³/m²·h, preferably of less than 10 m³/m²·h, more preferably of less than 14 m³/m²·h and most preferably of less than 5 m³/m²·h, wherein the separation process is preferably an absorption process, a stripping process, a scrubbing process or a distillation process.
